Europäisches Patentamt

European Patent Office

Office européen des brevets

(19)

(11) Numéro de publication: **0 180 502**
**B1**

# (12) FASCICULE DE BREVET EUROPEEN

(45) Date de publication du fascicule du brevet:
**17.02.88**

(21) Numéro de dépôt: **85401970.0**

(22) Date de dépôt: **09.10.85**

(51) Int. Cl.⁴: **F 41 F 21/00,** F 41 D 11/24,
B 64 D 7/06

(54) Dispositif pour le pointage d'un armement.

(30) Priorité: **24.10.84 FR 8416284**

(43) Date de publication de la demande:
**07.05.86 Bulletin 86/19**

(45) Mention de la délivrance du brevet:
**17.02.88 Bulletin 88/7**

(84) Etats contractants désignés:
**BE DE GB IT NL**

(56) Documents cités:
**DE - C - 33 812**
**GB - A - 590 063**
**GB - A - 2 017 617**
**US - A - 1 806 724**

(73) Titulaire: **AEROSPATIALE Société Nationale
Industrielle, 37, Boulevard de Montmorency,
F-75781 Paris Cédex 16 (FR)**

(72) Inventeur: **Ducros, André Jean, 15, Lotissement Le
Planet II Boulevard des Plaines, F-13700 Marignane (FR)**

(74) Mandataire: **Bonnetat, Christian et al, Cabinet PROPI
Conseils 23 rue de Léningrad, F-75008 Paris (FR)**

## Description

La présente invention concerne un dispositif pour le pointage d'un armement, par exemple en site.

Par le brevet DE-C-33 812, on connaît déjà un dispositif pour le pointage d'un armement comportant un châssis, un affût supportant ledit armement et monté rotatif par rapport audit châssis par l'intermédiaire de bielles jumelées de longueur fixe et un vérin de commande de rotation monté entre ledit châssis et ledit affût.

Dans ce dispositif connu, l'affût est monté sur le châssis par l'intermédiaire d'un palier fixe et le vérin, dont la ligne d'action est sensiblement orthogonale à l'axe dudit palier, est disposé du côté dudit palier opposé à l'armement.

Le centre de gravité de l'ensemble rotatif constitué par l'affût et l'armement est donc éloigné de l'axe de rotation du palier et il résulte de cette disposition connue que le vérin doit vaincre une inertie importante et faire subir à cet ensemble rotatif des déplacements notables.

Outre les complications mécaniques que cela entraîne, il va de soi que les effets de cette disposition nuisent à la qualité du pointage de l'armement.

La présente invention a pour objet de remédier à ces inconvénients. Elle concerne un dispositif de pointage du type rappelé ci-dessus duquel on a éliminé les problèmes dus à l'éloignement important du centre de gravité de l'ensemble rotatif par rapport à l'axe de rotation de l'affût, ainsi qu'aux déplacements notables subis par ce centre de gravité pendant la rotation dudit ensemble.

A cette fin, selon l'invention, le dispositif pour le pointage d'un armement du type rappelé ci-dessus, est caractérisé en ce que les axes longitudinaux desdites bielles jumelées concourent en direction dudit armement.

Ainsi, lorsque le vérin de commande est actionné, l'ensemble rotatif constitué de l'affût et de l'armement pivote autour d'une centre instantané de rotation situé au point d'interseption des axes longitudinaux desdites bielles jumelées. On peut alors aisément faire suivre à ce centre instantané de rotation un lieu géométrique de grande amplitude, afin de minimiser en retour l'amplitude du déplacement du centre de gravité dudit ensemble rotatif.

On voit qu'il est possible de situer le lieu géométrique de ce centre instantané de rotation au mieux par rapport au centre de gravité de l'ensemble rotatif, en fonction de l'amplitude de pointage désirée.

On peut de plus modifier facilement le lieu géométrique du centre instantané de rotation de l'ensemble rotatif par simple échange des bielles jumelées et/ou de l'affût, sans toucher au châssis.

Afin de minimiser encore l'amplitude du déplacement du centre de gravité de l'ensemble rotatif, ainsi que la masse de ce dernier, il est avantageux que ledit affût présente la forme d'un plateau, dont le plan est parallèle aux axes d'articulation desdites bielles sur lui-même et sur ledit châssis.

En plus d'une faible masse, on obtient alors l'avantage d'un encombrement réduit.

Dans un mode de réalisation préféré, les bielles d'articulation et le vérin de commande sont disposés du côté de l'affût opposé à l'armement. Il est avantageux que l'axe d'articulation du vérin de commande sur l'affût soit disposé du côté de l'axe d'articulation d'une des bielles sur ledit plateau et que l'axe d'articulation du vérin sur le châssis soit disposé du côté de l'axe d'articulation de l'autre desdites bielles sur ledit châssis. Il est également avantageux que l'axe d'articulation du vérin de commande sur l'affût soit proche de l'axe d'articulation de la bielle correspondante sur ledit plateau.

Bien entendu, au moins l'une desdites bielles jumelées peut être doublée par au moins une bielle identique, dont les axes d'articulation sont coaxiaux à ceux de ladite bielle doublée.

On remarquera que le document GB-A-2 017 617 décrit un dispositif pour le pointage d'un armement comportant deux bielles de longueur fixe articulées autour d'axes communs, aussi bien sur le châssis que sur l'affût, et mues par un vérin dont le point d'articulation sur l'affût est proche de celui desdites bielles.

Les figures du dessin annexé feront bien comprendre comment l'invention peut être réalisée. Sur ces figures, des références identiques désignent des éléments semblables.

La figure 1 est une vue de côté schématique d'un mode de réalisation du dispositif selon l'invention.

La figure 2 est une épure géométrique illustrant le fonctionnement du dispositif de la figure 1.

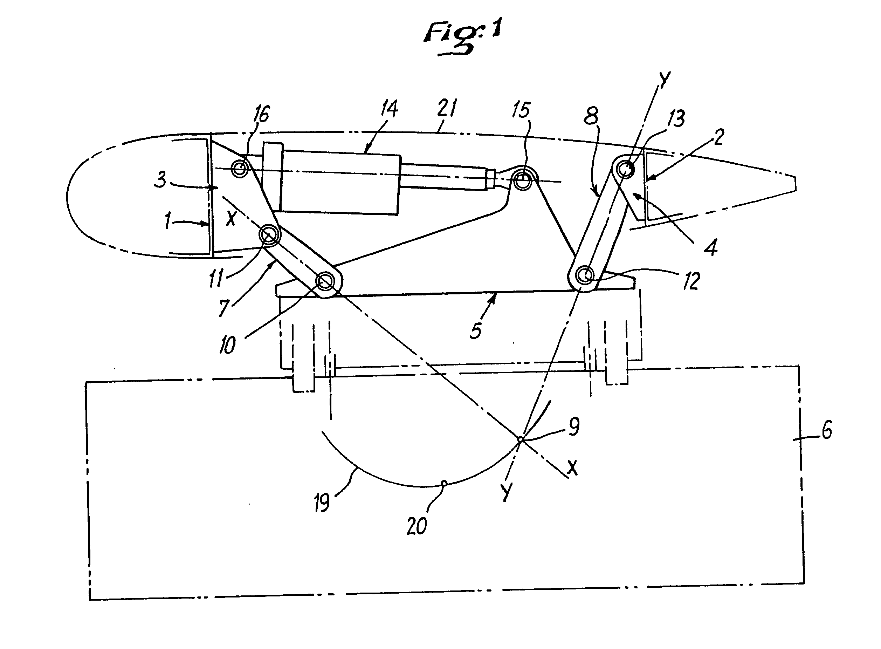

Le dispositif pour le pointage d'un armement, conforme à l'invention et montré par la figure 1, comporte un châssis, simplement représenté à l'aide de deux profilés parallèles 1 et 2 portant des pattes d'articulation 3 et 4 respectivement, ainsi qu'un affût 5 en forme de plateau portant un armement 6 sur l'une de des faces.

Sur la figure 1, le plan du plateau 5 est orthogonal au plan de la figure. L'armement 6, qui n'est représenté que par un rectangle en trait mixte sans souci d'échelle pour des raisons de dessin, est fixé de toute manière connue sur la face correspondante dudit plateau 5.

Du côté opposé à l'armement 6, le plateau 5 est articulé au châssis 1 à 4 par l'intermédiaire de bielles 7 et 8, dont les axes longitudinaux X-X et Y-Y respectivement, concourent l'un vers l'autre du côté de l'armement 6, pour se couper en un point 9.

La bielle 7 est articulée sur le plateau 5 et sur la patte 3, par l'intermédiaire d'arbres 10 et 11 respectivement. De même, la bielle 8 est articulée sur le plateau 5 et sur la patte 4, par l'intermédiaire d'arbres 12 et 13 respectivement.

Par ailleurs, du même côté du plateau 5 que les bielles 7 et 8, est prévu un vérin de commande 14, dont une extrémité est articulée sur le plateau 5, du côté de la patte 4 et au voisinage de l'axe 12, par l'intermédiaire d'un arbre 15. L'autre extrémité du vérin de commande 14 est articulée sur la patte 3, autour d'un arbre 16.

Les arbres 10, 11, 12, 13, 15 et 16 sont parallèles entre eux et orthogonaux au plan de la figure 1.

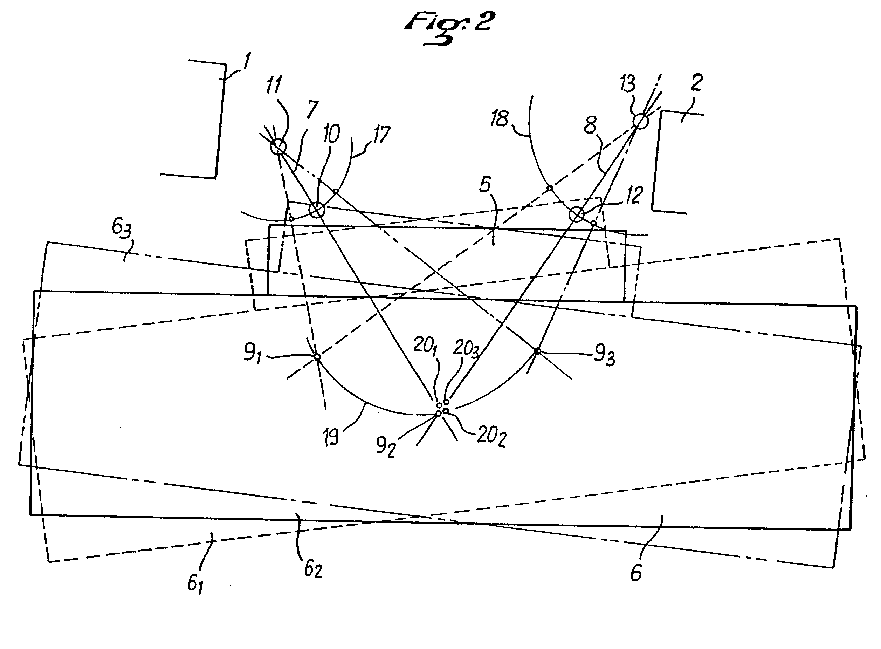

Comme le montre la figure 2, lorsque le vérin 14 est commandé à l'allongement ou au raccourcissement, les bielles 7 et 8 sont entraînées en rotation par l'intermédiaire du plateau 5, de sorte que l'arbre 10 de la bielle 7 se déplace sur un cercle 17 de centre 11 et de rayon égal à la distance séparant les arbres 10 et 11, tandis que l'arbre 12 de la bielle 8 se déplace sur un cercle 18 de centre 13 et de rayon égal à la distance séparant les arbres 12 et 13.

Il en résulte que le centre instantané de rotation du plateau 5 et de l'armement 6, se trouvant à l'intersection 9 des axes X-X et Y-Y, décrit un lieu géométrique 19.

Sur la figure 2, on a tracé les positions $9_1$, $9_2$ et $9_3$ du centre instantané de rotation 9 pour trois dispositions relatives des bielles 7 et 8 et du plateau 5. On y a également montré les variations correspondantes de positions $20_1$, $20_2$ et $20_3$ du centre de gravité 20 de l'ensemble rotatif constitué du plateau 5 et de l'armement 6. On peut constater que si le centre instantanément de rotation 9 subit des déplacements de grande amplitude, en revanche le centre de gravité 20 ne se déplace que peu. De plus, on remarquera que les différentes positions $20_1$, $20_1$ et $20_3$ du centre de gravité 20 restent très proches du lieu géométrique 19 du centre instantané de rotation 9, de sorte que l'inertie et l'amplitude de rotation de l'ensemble pivotant 5, 6 restent faibles. Sur la figure 2, on a représenté les trois positions $6_1$, $6_2$ et $6_3$ de l'armement 6 correspondant respectivement aux positions $9_1$, $9_2$ et $9_3$.

Comme on peut le voir sur la figure 1, le dispositif de pointage selon l'invention peut être aisément incorporé dans une aile d'aéronef 21. Dans ce cas, le châssis 1, 2, 3 et 4 est interne à ladite aile, tandisi que le plateau 5 et les bielles 7 et 8 traversent la peau de l'aile (par exemple du côté intrados).

## Revendications

1. Dispositif pour le pointage d'un armement comportant un châssis, un affût supportant ledit armement et monté rotatif par rapport audit châssis par l'intermédiaire de bielles jumelées (7, 8) de longueur fixe et un vérin de commande de rotation monté entre ledit châssis et ledit affût, caractérisé en ce que les axes longitudinaux (X-X, Y-Y) desdites bielles jumelées concourent (en 9) en direction dudit armement (6).

2. Dispositif selon la revendication 1, caractérisé en ce que ledit affût (5) présente la forme d'un plateau, dont le plan est parallèle aux axes d'articulation (10 à 13) desdites bielles (7, 8) sur lui-même et sur ledit châssis (1 à 4).

3. Dispositif selon l'une des revendications 1 ou 2, caractérisé en ce que les bielles d'articulation (7, 8) et le vérin de commande (14) sont disposés du côté de l'affût (5) opposé à l'armement (6).

4. Dispositif selon l'une des revendications 1 à 3, caractérisé en ce que l'axe d'articulation (15) du vérin de commande (14) sur l'affût (5) est disposé du côté de l'axe d'articulation (12) de la bielle (8) sur ledit affût (5) et en ce que l'axe d'articulation (16) du vérin (14) sur le châssis (1 à 4) est disposé du côté de l'axe d'articulation (11) de l'autre bielle (7) sur ledit châssis.

5. Dispositif selon l'une des revendications 1 à 4, caractérisé en ce que l'axe d'articulation (15) du vérin de commande (14) sur l'affût (5) est proche de l'axe d'articulation (12) de la bielle correspondante (8) sur ledit affût.

6. Dispositif selon l'une des revendications 1 à 5, caractérisé en ce que au moins l'une desdites bielles jumelées (7 ou 8) est doublée par au moins une bielle identique, dont les axes d'articulation sont coaxiaux à ceux de ladite bielle doublée.

## Patentansprüche

1. Ausrichtvorrichtung für eine Waffe mit einem Chassis, einer die Waffe tragenden Lafette, die über sich entsprechenden Zwischengliedern (7, 8) von fester Länge drehbar bezüglich des Chassis angebracht ist, sowie mit einem zwischen dem Chassis und der Lafette angebrachten Stellglied, dadurch gekennzeichnet, dass die Längsachsen (X-X, Y-Y) der sich entsprechenden Zwischenglieder sich (bei 9) in Richtung der Waffe (6) schneiden.

2. Vorrichtung nach Anspruch 1, dadurch gekennzeichnet, dass die Lafette (5) die Form einer Platte aufweist, deren Ebene parallel zu den Gelenkachsen (10 bis 13) der Zwischenglieder (7, 8) um sie selbst sowie um das Chassis (1 bis 3) verläuft.

3. Vorrichtung nach einem der Ansprüche 1 oder 2, dadurch gekennzeichnet, dass die gelenkartigen Zwischenglieder (7, 8) und das Stellglied (14) auf der zur Waffe (6) entgegengesetzten Seite der Lafette angeordnet sind.

4. Vorrichtung nach einem der Ansprüche 1 bis 3, dadurch gekennzeichnet, dass die Drehachse (15) des Stellgliedes (14) um die Lafette (5) auf der Seite der Drehachse (12) des Zwischengliedes (8) um die Lafette (5) und dass die Drehachse (16) des Stellgliedes (14) um das Chassis (1 bis 4) auf der Seite der Drehachse (11) des anderen Zwischengliedes (7) um das Chassis (1 bis 4) angeordnet ist.

5. Vorrichtung nach einem der Ansprüche 1 bis 4, dadurch gekennzeichnet, dass die Drehachse (15) des Stellgliedes (14) um die Lafette (5) sich nah an der Drehachse (12) des entsprechenden Zwischengliedes (8) um die Lafette (5) befindet.

6. Vorrichtung nach einem der Ansprüche 1 bis 5, dadurch gekennzeichnet, dass wenigstens eines der angebundenen Zwischenglieder (7 oder 8) durch wenigstens ein identisches Zwischenglied verdoppelt ist, dessen Drehachsen koaxial zu denen des verdoppelten Zwischengliedes verlaufen.

## Claims

1. Device for aiming a weapon comprising a frame, a mounting supporting said weapon and mounted rotatably with respect to said frame by means of coupled rods (7, 8) having a fixed length and a rotation controlling jack mounted between said frame and said mounting, characterized in that the longitudinal axes (X-X, Y-Y) of said coupled rods converge (in 9) in direction of said weapon (6).

2. Device according to claim 1, characterized in that the said mounting (5) has the form of a plate, the plan of which is parallel to the articulation axes (10 to 13) of said rods (7, 8) on itself and on said frame (1 to 4).

3. Device according to one of claims 1 or 2, characterized in that the articulation rods (7, 8) and the control jack (14) are disposed on the side of the mounting (5) opposite the weapon (6).

4. Device according to one of claims 1 to 3, characterized in that the articulation axis (15) of the control jack (14) on the mounting (5) is disposed on the side of the articulation axis (12) of the rod (8) on said mounting (5), and in that the articulation axis (16) of the jack (14) on the frame (1 to 4) is disposed on the side of the articulation axis (11) of the other rod (7) on said frame.

5. Device according to one of claims 1 to 4, characterized in that the articulation axis (15) of the control jack (14) on the mounting (5) is near the articulation axis (12) of the corresponding rod (8) on said mounting.

6. Device according to any one of claims 1 to 5, characterized in that at least one of said coupled rods (7 or 8) is doubled by at least one identical rod, the articulation axes of which are coaxial with those of said doubled rod.

*Fig:1*

0 180 502

Fig.2